# EUROPÄISCHE PATENTSCHRIFT

(11) **EP 2 220 140 B1**
(45) Veröffentlichungstag und Bekanntmachung des Hinweises auf die Patenterteilung: **06.07.2016**
(21) Anmeldenummer: 08851312.2
(22) Anmeldetag: 21.11.2008
(51) Int. Cl.: C08G 59/42

(54) **SCHLAGZÄHIGKEITSVERBESSERER FÜR EPOXIDHARZZUSAMMENSETZUNGEN**
IMPACT MODIFIER FOR EPOXY RESIN COMPOSITES
AMÉLIORATEUR DE LA RÉSILIENCE POUR COMPOSITIONS DE RÉSINE ÉPOXYDE

(30) Priorität: 21.11.2007 EP 07121178
(43) Veröffentlichungstag der Anmeldung: 25.08.2010
(73) Patentinhaber: Sika Technology AG, 6340 Baar (CH)
(72) Erfinder: FRICK, Karsten, CH-5453 Remetschwil (CH); FINTER, Jürgen, CH-8037 Zürich (CH); GERBER, Ulrich, CH-8142 Uitikon-Waldegg (CH); MEIER, Yves, CH-8048 Zürich (CH); CLIFFORD, Jeannette, CH-5620 Bremgarten (CH)
(74) Vertreter: Sika Patent Attorneys
(86) Internationale Anmeldenummer: PCT/EP2008/065949
(87) Internationale Veröffentlichungsnummer: WO 2009/065914

(56) Entgegenhaltungen:
- EP-A- 0 353 190
- EP-A- 0 381 625
- DE-A1- 19 858 921
- US-A- 4 707 518
- US-A- 5 278 257
- US-A- 5 280 068
- US-A1- 2004 181 013

## Beschreibung

### Technisches Gebiet

Die Erfindung betrifft das Gebiet der Schlagzähigkeitsverbesserer und das Gebiet der Epoxidharzzusammensetzungen.

### Stand der Technik

Schlagzähigkeitsverbesserer werden dazu eingesetzt, um die Festigkeit von Klebstoffen bei schlagartiger Krafteinwirkung zu verbessern. Insbesondere Epoxidharzzusammensetzungen weisen generell zwar hohe mechanische Festigkeiten auf, sind jedoch sehr spröde, das heisst bei einer schlagartigen Krafteinwirkung, wie sie beispielsweise in einem Zusammenstoss von Fahrzeugen eintritt, bricht das gehärtete Epoxidharz und führt dadurch zu einer Zerstörung des Verbundes.

Flüssigkautschuke werden schon seit längerem zur Zähigkeitsmodifizierung eingesetzt. Beispielsweise wurden Flüssigkautschuke auf Basis von Acrylnitril/Butadien-Copolymeren eingesetzt, wie sie beispielsweise unter dem Namen Hycar^{®} von der Firma Emerald Performance Materials, LLC, USA, kommerziell erhältlich sind. Weiterhin bekannt ist der Einsatz von Addukten von Acrylnitril/Butadien-Copolymeren mit Epoxid-Festharzen wie sie beispielsweise beschrieben sind in EP 0 308 664 B1.

Derartige bekannte Epoxidharzzusammensetzungen haben sich insbesondere beim Einsatz an metallischen Oberflächen, wie dies beispielsweise im Fahrzeugbau der Fall ist, als nachteilig erwiesen, wo schlagzähmodifizierte Epoxidharzzusammensetzungen als Klebstoffe oder als Strukturschäume zur Verstärkung in Hohlräumen in strukturellen Bauteilen, als so genannten "Reinforcer", eingesetzt werden. Ein Hauptgrund dafür ist die ungenügende Alterungsbeständigkeit aufgrund auftretender Korrosion im Bereich zwischen der Substratoberfläche und dem Klebstoff bzw. dem Reinforcer. Diese so genannte Unterwanderungskorrosion schwächt die Klebeverbindung und führt zu einem adhäsiven Bruch des Haftverbunds.

### Darstellung der Erfindung

Aufgabe der vorliegenden Erfindung ist es daher, Schlagzähigkeitsverbesserer zur Verfügung zu stellen, welche gegenüber den aus dem Stand der Technik bekannten Schlagzähigkeitsverbesserer in Epoxidharzzusammensetzungen zu einer Verbesserung der Schlagzähigkeit und zu einer Verbesserung der Korrosionsbeständigkeit gegenüber Unterwanderungskorrosion und damit auch zu einer Verbesserung der Haftung, insbesondere auf metallischen Oberflächen, führen.

Überraschenderweise wurde gefunden, dass diese Aufgabe durch Polymere gemäss Anspruch 1 gelöst werden kann. Der Einsatz derartiger Polymere in Epoxidharzzusammensetzungen führt insbesondere bei der Verklebung an oder von metallischen Oberflächen zu einer wesentlich geringeren Unterwanderungskorrosion und somit zu einem deutlich stärkeren und langlebigeren Haftverbund.

Weitere Aspekte der Erfindung sind Gegenstand weiterer unabhängiger Ansprüche. Besonders bevorzugte Ausführungsformen der Erfindung sind Gegenstand der abhängigen Ansprüche.

### Kurze Beschreibung der Zeichnungen

Anhand der Zeichnungen werden Ausführungsbeispiele der Erfindung näher erläutert. Gleiche Elemente sind in den verschiedenen Figuren mit den gleichen Bezugszeichen versehen. Selbstverständlich ist die Erfindung nicht auf gezeigte und beschriebene Ausführungsbeispiele beschränkt.

Es zeigen:
- Figur 1: eine schematische Darstellung eines Verstärkungsteils vor der Schäumung;
- Figur 2: eine schematische Darstellung eines Verstärkungsteils nach der Schäumung.

In den Figuren sind nur die für das unmittelbare Verständnis der Erfindung wesentlichen Elemente gezeigt.

### Wege zur Ausführung der Erfindung

Die vorliegende Erfindung betrifft in einem ersten Aspekt ein Polymer der Formel (I).

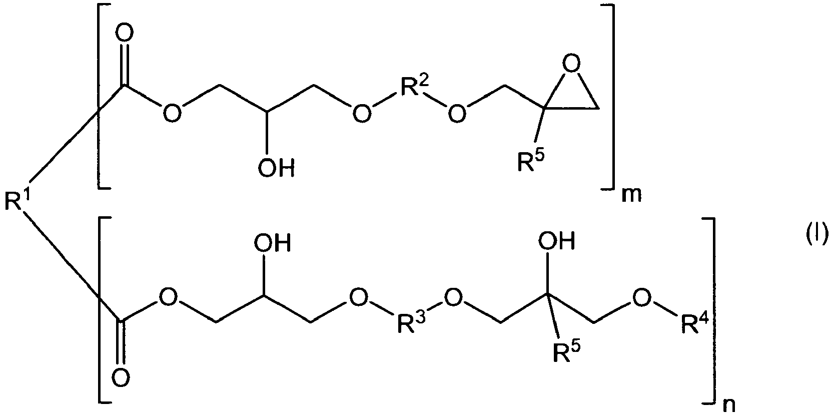

Der Begriff "Polymer" umfasst im vorliegenden Dokument einerseits ein Kollektiv von chemisch einheitlichen, sich aber in Bezug auf Polymerisationsgrad, Molmasse und Kettenlänge unterscheidenden Makromolekülen, das durch eine Polyreaktion (Polymerisation, Polyaddition, Polykondensation) hergestellt wurde. Der Begriff umfasst andererseits auch Derivate eines solchen Kollektivs von Makromolekülen aus Polyreaktionen, Verbindungen also, die durch Umsetzungen, wie beispielsweise Additionen oder Substitutionen, von funktionellen Gruppen an vorgegebenen Makromolekülen erhalten wurden und die chemisch einheitlich oder chemisch uneinheitlich sein können. Der Begriff umfasst weiterhin auch so genannte Prepolymere, das heisst reaktive oligomere Voraddukte, deren funktionelle Gruppen am Aufbau von Makromolekülen beteiligt sind.

Mit "Poly" beginnende Substanznamen wie beispielsweise Polyol oder Polyamin bezeichnen im vorliegenden Dokument Substanzen, die formal zwei oder mehr der in ihrem Namen vorkommenden funktionellen Gruppen pro Molekül enthalten.

Der Begriff "Epoxid-Festharz" ist dem Epoxid-Fachmann bestens bekannt und wird im Gegensatz zu "Epoxid-Flüssigharz" verwendet. Die Glasübergangstemperatur T_{G} der Epoxid-Festharze liegt über der Raumtemperatur von 25 °C, d.h. sie lassen sich bei Raumtemperatur zu schüttfähigen Partikeln zerkleinern.

Der Begriff "Diphenol" bezeichnet im vorliegenden Dokument einkernige, mehrkernige sowie kondensierte Aromaten und Heteroaromaten, welche zwei phenolische Hydroxylgruppen aufweisen.

Im Polymer der Formel (I) steht der Rest R¹ für einen zweiwertigen Rest eines Carboxylgruppen terminierten Butadien/Acrylnitril-Copolymers **CTBN** nach Entfernung der terminalen Carboxylgruppen.

Die Reste R² und R³ stehen unabhängig voneinander jeweils für einen zweiwertigen Rest eines Epoxid-Festharzes nach Entfernung der Glycidylethergruppen.

Insbesondere stehen die Reste R² und R³ unabhängig voneinander für einen zweiwertigen Rest der Formel (II) 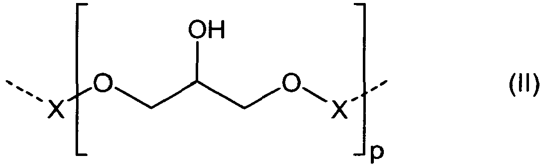 wobei p für einen Wert von ≥ 2, insbesondere von 2 bis 12, bevorzugt von 2 bis 7, steht.

Der Rest X steht unabhängig voneinander jeweils für einen zweiwertigen Rest eines Diphenols nach Entfernung der beiden Hydroxylgruppen. Als Diphenol eignen sich insbesondere Diphenole, welche ausgewählt sind aus der Gruppe bestehend aus 1,4-Dihydroxybenzol, 1,3-Dihydroxybenzol, 1,2-Dihydroxybenzol, 1,3-Dihydroxytoluol, 3,5-Dihydroxy-benzoate, 2,2-Bis(4-hydroxyphenyl)propan (= Bisphenol A), Bis(4-hydroxy-phenyl)methan (= Bisphenol F), Bis(4-hydroxyphenyl)sulfon (= Bisphenol S), Naphtoresorcin, Dihydroxynaphthalin, Dihydroxyanthrachinon, Dihydroxy-biphenyl, 3,3-bis(p-hydroxyphenyl)phthalide, 5,5-Bis(4-hydroxyphenyl)hexahydro-4,7-methanoindan, Phenolpthalein, Fluorescein, 4,4'-[bis-(hydroxy-phenyl)-1,3-Phenylenbis-(1-Methyl-ethyliden)] (= Bisphenol M), 4,4'-[bis-(hydroxyphenyl)-1,4-Phenylenbis-(1-Methyl-ethyliden)] (= Bisphenol P), 2,2'-Diallyl-bisphenol-A, Diphenole und Dikresole hergestellt durch Umsetzung von Phenolen oder Kresolen mit Di-isopropylidenbenzol sowie alle Isomeren der vorgenannten Verbindungen.

Der Rest R⁴ steht für eine Alkylarylgruppe oder für einen einkernigen, mehrkernigen oder kondensierten aromatischen Rest, welcher für den Fall, dass m = 0 ist, gegebenenfalls eine oder mehrere phenolische Hydroxylgruppen aufweist; oder für einen Rest der Formel (III) 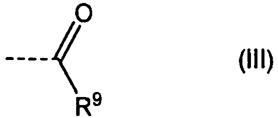 wobei R⁹ für eine Alkylarylgruppe oder für einen einkernigen, mehrkernigen oder kondensierten aromatischen Rest steht, welcher für den Fall, dass m = 0 ist, gegebenenfalls eine oder mehrere phenolische Hydroxylgruppen aufweist.

Der Rest R⁵ steht unabhängig voneinander jeweils für ein Wasserstoffatom oder für eine Methylgruppe.
m steht für einen Wert von 0 oder 1, insbesondere für 0, und n steht für einen Wert von 1 oder 2, insbesondere für 2, mit der Massgabe, dass (m + n) = 2 ist.

Polymere der Formel (I) wobei m = n = 1 oder m = 0 und n = 2 ist, haben gegenüber den Polymeren der Formel (I), bei welchen m = 2 und n = 0 ist, den Vorteil der höheren Lagerstabilität. Der Grund dafür ist, dass die Polymere mit m # 2 keine Kettenverlängerungen eingehen können. Dieser Vorteil zeichnet diese Polymere auch in ihrer Anwendung in Epoxidharzzusammensetzungen aus.

Insbesondere steht der Rest R⁴ für Phenol, Kresol, p-tert.-Butylphenol, Cardanol (3-Pentadecenylphenol (aus Cashewnuss-Schalen-Öl)), Nonylphenol, Hydrochinon-monomethylether, Hydroxybenzylalkohol, sowie für eine aromatische oder aliphatische Carbonsäure wie Benzoesäure oder eine Fettsäure, nach Entfernung einer Hydroxylgruppe.

Unter der Voraussetzung, dass im Polymer der Formel (I) m = 0 ist, das heisst, dass keine Epoxidgruppen vorhanden sind, kann der Rest R⁴ gegebenenfalls auch eine oder mehrere freie Hydroxylgruppen aufweisen. Insbesondere kann R⁴ in diesem Fall auch für ein Diphenol wie beispielsweise mit Styrol oder Dicyclopentadien umgesetzte Phenole, Bisphenol A, Bisphenol F, Phenolphthalein. oder 4-Bis(4-hydroxyphenyl)valeriansäure, oder beispielsweise auch für p-Hydroxybenzoesäure, Hydroxybenzylalkohol oder Benzylalkohol nach Entfernung einer OH-Gruppe.

Im Polymer der Formel (I) steht der Rest R¹ insbesondere für einen zweiwertigen Rest der Formel (IV).

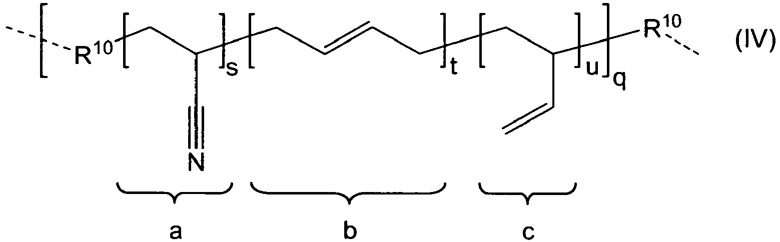

Die gestrichelten Linien stellen dabei die Bindungen zu den zwei Carboxylgruppen des **CTBN** dar. a stellt das Strukturelement dar, welches von Acrylnitril stammt und b und c die Strukturelemente, welche von Butadien stammen.

Der Rest R¹⁰ steht für einen linearen oder verzweigten Alkylenrest mit 1 bis 6 C-Atomen, insbesondere mit 4 C-Atomen, welcher gegebenenfalls mit ungesättigten Gruppen substituiert ist.

Weiterhin steht der Index q für einen Wert zwischen 40 und 100, insbesondere zwischen 50 und 90, bevorzugt zwischen 52 und 66, meist bevorzugt zwischen 54 und 62. Die Indices s, t, und u stellen ihrerseits Werte dar, die das Verhältnis der Strukturelemente a, b und c zueinander beschreiben. Der Index s steht für Werte von 0.05 bis 0.3, insbesondere von 0.1 bis 0.25, bevorzugt von 0.1 bis 0.2, meist bevorzugt von 0.1 bis 0.18, der Index t für Werte von 0.5 bis 0.8, insbesondere von 0.6 bis 0.7, der Index u für Werte von 0.1 bis 0.2, insbesondere von 0.13 bis 0.15, mit der Massgabe, dass die Summe von s, t und u gleich 1 ist.

Dem Fachmann ist klar, dass die in Formel (IV) gezeigte Struktur als vereinfachte Darstellung zu verstehen ist. Somit können die Strukturelemente, welche mit a, b und c bezeichnet sind, jeweils zufällig, abwechselnd oder blockweise zueinander angeordnet sein.

Insbesondere steht R¹ für einen Rest, wie er nach der formellen Entfernung der Carboxylgruppen, aus einem unter dem Handelsnamen Hycar^{®} CTBN von der Firma Emerald Performance Materials, LLC, USA, kommerziell vertriebenen Carboxylgruppen terminierten Butadien/Acrylonitril-Copolymer **CTBN** erhältlich ist.

Erfindungsgemässe Polymere der Formel (I), wie sie vorhergehend beschreiben worden sind, weisen bei Raumtemperatur typischerweise einen festen Aggregatszustand auf. Dadurch erleichtert sich die Handhabung derartiger Polymere gegenüber bei Raumtemperatur flüssigen oder auch zähflüssigen Polymeren erheblich.

In einem zweiten Aspekt umfasst die Erfindung ein Verfahren zur Herstellung eines Polymers der Formel (I), wie es vorhergehend beschreiben wurde. Dabei wird ein Carboxylgruppen terminiertes Polymer der Formel (V) mit einem Epoxid-Festharz der Formel (VI) umgesetzt 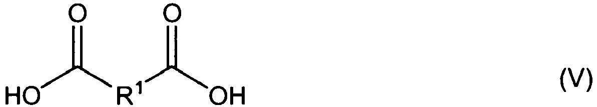 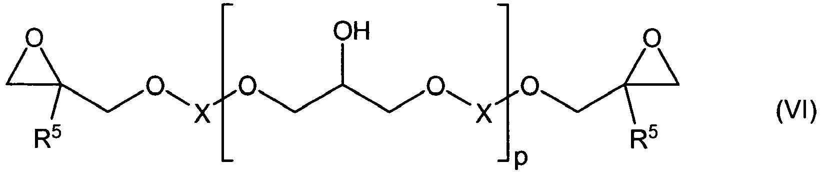 wobei die Reste R¹, R⁵ und X sowie der Index p bereits vorhergehend beschrieben worden sind.

Für die Erfindung ist es dabei wesentlich, dass das Carboxylgruppen terminierte Polymer der Formel (V) mit einem Epoxid-Festharz und nicht mit einem Epoxid-Flüssigharz umgesetzt wird, das heisst dass die Reste R² und R³ im Polymer der Formel (I) entsprechend unabhängig voneinander Epoxid-Festharze nach Entfernung der zwei Glycidylgruppen darstellen. Der Einsatz von Epoxid-Flüssigharz modifizierten Butadien/Acrylonitril-Copolymeren **CTBN** führt nur zu einer marginalen Verminderung der Unterwanderungskorrosion bei Verklebungen an oder von metallischen Oberflächen. Dem gegenüber führt der Einsatz von erfindungsgemässen Epoxid-Festharz modifizierten Butadien/Acrylonitril-Copolymeren **CTBN** überraschenderweise zu einer drastischen Verminderung der Unterwanderungskorrosion.

Das Polymer der Formel (I) wird durch Umsetzung des Carboxylgruppen terminierten Polymers der Formel (V) mit einem stöchiometrischen Überschuss des Epoxid-Festharzes der Formel (VI) hergestellt.

Das molare Verhältnis der Epoxidgruppen des Epoxid-Festharzes zu den Carboxylgruppen des Butadien/Acrylonitril-Copolymeren **CTBN** ist dabei ≥ 2:1, bevorzugt zwischen 3:1 und 10:1. Dadurch ist sichergestellt, dass alle Carboxylgruppen mit Epoxidgruppen umgesetzt sind. Gleichzeitig wird auch verhindert, dass sich Prepolymere mit Molekulargewichten von über 20'000 Dalton bilden.

Für die Herstellung von Polymeren der Formel (I), wobei n ≠ 0 ist, das heisst, dass die Epoxidgruppen des Polymers der Formel (I) zumindest teilweise mit Verbindungen der Formel (VII) umgesetzt werden, kann mit einem geringeren Überschuss an Epoxidgruppen gearbeitet werden.

HO-R⁴ (VII)

Der Rest R⁴ ist bereits vorhergehend beschrieben worden.

Die Herstellung eines Polymers der Formel (I), wobei n ≠ 0 ist, kann dabei stufenweise, beispielsweise über die Herstellung eines Polymers der Formel (I), wobei m = 2 und n = 0 ist, und anschliessender zumindest teilweiser Reaktion mit einer Verbindung der Formel (VII), oder in einem so genannten Eintopfverfahren erfolgen, wo das Carboxylgruppen terminierte Polymer der Formel (V), das Epoxid-Festharz der Formel (VI) und die Verbindung der Formel (VII) zusammen umgesetzt werden.

Bevorzugt wird das Polymer der Formel (I), mit n ≠ 0, stufenweise hergestellt, wobei das Epoxid-Festharz der Formel (VI) vor der Reaktion mit dem Carboxylgruppen terminierten Polymer der Formel (V) einseitig mit einer Verbindung der Formel (VII) umgesetzt wird.

Derartige Umsetzungen von Epoxiden bzw. Glycidylethern mit Carbonsäuren sowie die Reaktionsbedingungen hierfür sind dem Fachmann bekannt. Insbesondere verläuft die Umsetzung unter Schutzatmosphäre bei höheren Temperaturen, typischerweise über 100°C, bevorzugt bei etwa 140°C, und gegebenenfalls unter Verwendung von Katalysatoren. Beispiele für derartige Katalysatoren sind Triphenylphosphin, tertiäre Amine, quatemäre Phosphoniumsalze oder quaternäre Ammoniumsalze.

In einem weiteren Aspekt umfasst die vorliegende Erfindung die Verwendung eines vorhergehend beschriebenen Polymers der Formel (I) als Schlagzähigkeitsverbesserer in einer Polymermatrix.

Unter "Schlagzähigkeitsverbesserer" werden im vorliegenden Dokument Stoffe oder Verbindungen verstanden, welche in einer Polymermatrix eingesetzt werden, um dieser Polymermatrix die Fähigkeit zu verleihen bzw. die Fähigkeit dieser Polymermatrix zu verbessern, Stoss- und Schlagenergie zu absorbieren, ohne dabei zu brechen oder einen sonstigen Schaden zu nehmen.

Diese Polymere der Formel (I) werden vorzugsweise in vernetzenden Zusammensetzungen verwendet, insbesondere in Systemen, in welche diese Polymere einreagieren können. Somit ist die Frage, in welchen Zusammensetzungen diese Polymere eingesetzt werden, insbesondere abhängig von der Polymermatrix. Demnach werden Epoxidgruppen terminierte Polymere der Formel (I) bevorzugt in Epoxidharzzusammensetzungen eingesetzt.

In einem weiteren Aspekt geht die Erfindung aus von einer Zusammensetzung umfassend
a) mindestens ein wie vorhergehend beschriebenes Polymer der Formel (I);
b) mindestens ein Epoxid-Festharz **EP**; sowie
c) mindestens einen Härter **H** für Epoxidharze.

Als Epoxid-Festharze **EP** eignen sich insbesondere Epoxid-Festharze der Formel (VI) wobei der Substituent R⁵ sowie der Index p vorhergehend bereits beschrieben worden sind.

Bevorzugte Epoxid-Festharze **EP** weisen eine Glasübergangstemperatur T_{G} von ≥ 25 °C, insbesondere von ≥ 30 °C, auf, lassen sich typischerweise herstellen aus der Umsetzung von Verbindungen der Formel HO-X-OH mit Epichlorhydrin und/oder 2-Methyl-epichlorhydrin, wobei X bereits vorhergehend beschrieben worden ist. Dem Fachmann ist dabei klar, dass X im Polymer der Formel (I) und Epoxid-Festharz **EP** unabhängig voneinander aus der beschriebenen Gruppe ausgewählt sein können.

Derartige Epoxid-Festharze **EP** sind beispielsweise kommerziell erhältlich unter den Handelsnamen Araldite^{®} GT 7071 oder Araldite^{®} GT 7004 von der Firma Huntsman International, LLC, USA. Weitere geeignete Epoxid-Festharze **EP** sind beispielsweise kommerziell erhältlich von The Dow Chemical Company, USA, oder von Hexion Specialty Chemicals Inc, USA.

Weiterhin können modifizierte Epoxid-Festharze, insbesondere fettsäuremodifizierte Epoxid-Festharze verwendet werden, wie sie beispielsweise unter dem Handelsnamen Araldite^{®} GT 6404 von der Firma Huntsman International, LLC, USA, kommerziell erhältlich sind.

Der Anteil des Epoxid-Festharzes **EP** beträgt vorzugsweise 30 bis 90 Gew.-%, insbesondere 35 bis 85 Gew.-%, bevorzugt 40 bis 75 Gew.-%, bezogen auf das Gesamtgewicht der Zusammensetzung.

Weiterhin umfasst die Zusammensetzung insbesondere mindestens einen Härter **H** für Epoxidharze.

Der Härter **H** enthält insbesondere gegenüber Epoxidgruppen reaktive Gruppen und liegt in blockierter Form oder kristallin als in Epoxiden schwerlösliche Verbindung vor. Bevorzugt wird der Härter **H** durch erhöhte Temperatur aktiviert.

Beispiele für geeignete Härter **H** sind Amine wie aliphatische, cycloaliphatische, aromatische oder araliphatische, bevorzugt primäre oder sekundäre, Amine und Polyamine; Addukte und Polyalkoxylierungsprodukte von Polyaminen; aminterminierte Polyalkylenglykole; Polyphenole wie Phenol- oder Kresolnovolake, Addukte von Monophenolen oder Polyphenolen mit Polyamiden; Polyamide, besonders solche, die sich ableiten von aliphatischen Polyaminen und dimerisierten oder trimerisierten Fettsäuren; Polysulfide; Anilinformaldehyde; mehrwertige Phenole; mehrwertige Carbonsäuren und ihre Anhydride.

Bevorzugte Härter **H** sind ausgewählt ist aus der Gruppe bestehend aus Dicyandiamid, Guanamin, Guanidin, Aminoguanidin und deren Derivate. Weiterhin möglich sind beschleunigend wirksame Härter, wie substituierte Harnstoffe, beispielsweise 3-(3-Chlor-4-methylphenyl)-1,1-dimethylharnstoff (Chlortoluron), oder Phenyl-Dimethylharnstoffe, insbesondere 3-(p-Chlorphenyl)-1,1-dimethylharnstoff (Monuron), 3-Phenyl-1,1-dimethylharnstoff (Fenuron) oder 3-(3,4-Dichlorphenyl)-1,1-dimethylhamstoff (Diuron). Weiterhin können Verbindungen der Klasse der Imidazole, Imidazoline und Amin-Komplexe eingesetzt werden.

Besonders bevorzugt ist der Härter **H** Dicyandiamid.

Der Härter **H** wird vorzugsweise in einer stöchiometrischen Menge bezogen auf die Epoxidgruppen in der Zusammensetzung eingesetzt. Das molare Verhältnis der Epoxidgruppen zum aktiven Wasserstoff des Härters **H** beträgt vorzugsweise 0.8 bis 1.2, insbesondere 0.9 bis 1.1, bevorzugt 0.95 bis 1.05.

Insbesondere beträgt der Anteil des Härters **H** 0.05 bis 30 Gew.-%, insbesondere 0.1 bis 15 Gew.-%, bevorzugt 0.2 bis 5 Gew.-%, bezogen auf das Gesamtgewicht der Zusammensetzung.

Weiterhin kann die Zusammensetzung zusätzlich mindestens ein Epoxid-Flüssigharz enthalten. Bevorzugte Epoxid-Flüssigharze weisen die Formel (VII) auf

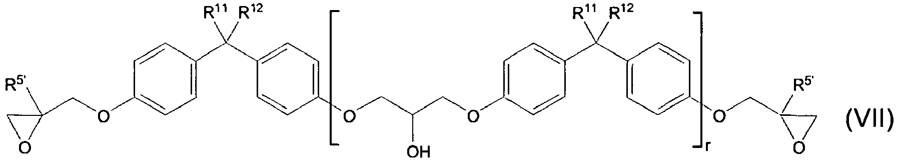

Hierbei stehen die Reste R^{5'}, R¹¹ und R¹² unabhängig voneinander entweder für H oder CH₃. Weiterhin steht der Index r für einen Wert von 0 bis 1. Bevorzugte Epoxid-Flüssigharze weisen einen Wert r von ≤ 0.2 auf.

Es handelt sich somit vorzugsweise um Diglycidylether von Bisphenol A (BADGE), von Bisphenol F (BFDGE) sowie von Bisphenol A/F. Die Bezeichnung ,A/F' verweist hierbei auf eine Mischung von Aceton mit Formaldehyd, welche bei dessen Herstellung als Edukt verwendet wird. Solche Flüssigharze sind beispielsweise unter den Handelsnamen Araldite^{®} GY 250, Araldite^{®} PY 304, Araldite^{®} GY 282 von der Firma Huntsman International, LLC, USA, oder D.E.R.^{®} 331 oder D.E.R.^{®} 330 von der Firma The Dow Chemical Company, USA, oder unter den Handelsnamen Epikote^{®} 828 oder Epikote^{®} 862 von der Firma Hexion Specialty Chemicals Inc., USA, kommerziell erhältlich.

Weiterhin kann die Zusammensetzung zusätzlich mindestens ein Epoxidgruppen aufweisendes Phenolharz enthalten. Bevorzugt werden dabei Phenolharze, welche hergestellt sind aus einer Polykondensationsreaktion von Phenol oder Kresol mit Formaldehyd in einem stöchiometrischen Verhältnis von Phenol zu Formaldehyd von ≥ 1:1, insbesondere von 1.2:1 bis 2:1, unter Verwendung meist saurer Katalysatoren, und anschliessender Reaktion des erhaltenen Polyphenols (auch Novolak genannt) mit Epichlorohydrin und/oder 2-Methyl-epichlorhydrin.

Derartige Epoxidgruppen aufweisende Polyphenole, bzw. Novolake sind beispielsweise unter den Handelsnamen D.E.N™ 431 und D.E.N™ 438 kommerziell erhältlich von The Dow Chemical Company, USA.

Vorteilhaft beträgt der Anteil des Epoxid-Flüssigharzes oder des Phenolharzes 0.1 bis 20 Gew.-%, vorzugsweise 0.1 bis 15 Gew.-%, insbesondere 0.1 bis 5 Gew.-%, bezogen auf das Gesamtgewicht der Zusammensetzung.

Die Zusammensetzung kann zusätzlich chemische oder physikalische Treibmittel enthalten. Als chemische Treibmittel werden organische oder anorganische Substanzen bezeichnet, welche unter Einfluss von Temperatur, Feuchtigkeit, elektromagnetischer Strahlung oder Chemikalien gasförmige Substanzen bilden oder abspalten. Derartige Substanzen sind insbesondere Azodicarbonamide, Sulfohydrazide, Hydrogencarbonate oder Carbonate. Als physikalische Treibmittel können Verbindungen eingesetzt werden, welche beispielsweise bei Änderung der Temperatur, des Drucks oder des Volumens, insbesondere bei Erhöhung der Temperatur, in den gasförmigen Aggregatzustand übergehen und so durch Volumenexpansion eine Schaumstruktur bilden. Insbesondere sind solche physikalischen Treibmittel Flüssigkeiten, welche bei erhöhter Temperatur verdampfen. Weiterhin können als physikalische Treibmittel Gase oder niedrigsiedende Flüssigkeiten eingesetzt werden, welche in mikroverkapselter Form in die Zusammensetzung eingebracht werden. Sowohl chemische als auch physikalische Treibmittel sind in der Lage Schaumstrukturen in Polymerzusammensetzungen zu erzeugen.

Bevorzugte Treibmittel sind chemische Treibmittel, die unter Einfluss von Temperatur zu einer Schäumung der Zusammensetzung führen. Die für die Schäumung erforderliche Wärme kann dabei durch externe Wärmequellen wie beispielsweise Lagerung in einem Ofen, Kontaktieren mit elektrischen Wärmeelementen, Mikrowellenstrahlung, Induktionsheizung und dergleichen, oder durch interne Wärmequellen wie beispielsweise durch eine exotherme chemische Reaktion eingebracht werden.

Geeignete Treibmittel sind beispielsweise kommerziell erhältlich unter dem Handelsnamen Expancel^{®} von der Firma Akzo Nobel, Niederlande, unter dem Handelsnamen Celogen^{®} von der Firma Chemtura Corp., USA, oder unter dem Handelsnamen Luvopor^{®} von der Firma Lehmann & Voss & Co. KG, Deutschland.

Die Zusammensetzung kann weiterhin zusätzliche feste Zähigkeitsverbesserer enthalten. Unter einem "Zähigkeitsverbesserer" wird hierbei und im Folgenden ein Zusatz zu einer Epoxidharzmatrix verstanden, der bereits bei geringen Zuschlägen von 0.1 bis 15 Gew.-%, insbesondere von 0.5 bis 8 Gew.-%, bezogen auf das Gesamtgewicht der Zusammensetzung, eine deutliche Zunahme der Zähigkeit bewirkt und somit in der Lage ist, höhere Biege-, Zug-, Schlag- oder Stossbeanspruchung aufzunehmen, bevor die Matrix einreisst oder bricht.

Derartige feste Zähigkeitsverbesserer sind beispielsweise organische ionengetauschte Schichtminerale, wie sie dem Fachmann unter den Begriffen Organoclay oder Nanoclay bekannt sind; Blockcopolymere, insbesondere der Monomere Styrol, Butadien, Acrylnitril und Methylmethacrylat; amorphes Siliciumdioxid; oder Core-Shell Polymere. Insbesondere ist der feste Zähigkeitsverbesserer ein Core-Shell Polymer.

Core-Shell-Polymere bestehen aus einem elastischen Kernpolymer (Core) und einem starren Schalen-Polymer (Shell). Besonders geeignete Core-Shell-Polymere bestehen aus einem Kern aus elastischem Acrylat- oder Butadien-Polymer, welcher von einer starren Schale eines starren thermoplastischen Polymers umhüllt ist.

Bevorzugte Core-Shell-Polymere sind sogenannte MBS Polymere, welche kommerziell unter dem Handelsnamen Clearstrength^{®} von Arkema, Inc., USA, Paraloid^{®} von Rohm and Haas Co., USA, oder F-351™ von Zeon Chemicals L.P., USA, erhältlich sind.

Besonders bevorzugt sind Core-Shell-Polymerpartikel, die bereits als getrockneter Polymerlatex vorliegen. Beispiele hierfür sind GENIOPERL^{®} M23A von Wacker Chemie AG, Deutschland, mit Polysiloxankem und Acrylatschale, strahlungsvernetzte Kautschukpartikel der NEP Reihe, hergestellt von Eliokem, Inc., USA, oder Nanopren^{®} von Lanxess AG, Deutschland, oder Paraloid^{®} EXL von Rohm and Haas Co., USA.

Weitere vergleichbare Beispiele für Core-Shell-Polymere werden unter dem Handelsamen Albidur^{®} von Nanoresins AG, Deutschland, angeboten.

Vorteilhaft beträgt der Anteil des festen Core-Shell Polymers 0.1 bis 15 Gew.-%, vorzugsweise 0.1 bis 8 Gew.-%, insbesondere 0.1 bis 5 Gew.-%, bezogen auf das Gesamtgewicht der Zusammensetzung.

Weiterhin kann die Zusammensetzung zusätzlich mindestens einen Füllstoff umfassen. Bevorzugt handelt es sich hierbei um einen Füllstoff, welcher ausgewählt ist aus der Gruppe bestehend aus Russ, Glimmer, Talk, Kaolin, Wollastonit, Feldspat, Syenith, Chlorit, Schichtsilikate wie beispielsweise Bentonite oder Montmorillonite, Calciumcarbonat (gefällt oder gemahlen), Dolomit, Quarz, Kieselsäuren (pyrogen oder gefällt), Cristobalit, Calciumoxid, Aluminiumhydroxid, Magnesiumoxid, Keramikhohlkugeln, Glashohlkugeln, organische Hohlkugeln, Glaskugeln, Farbpigmente, Glasfasern, Kunststofffasern und Kohlefasern. Als Füllstoff sind sowohl die organisch modifizierten als auch die unbehandelten kommerziell erhältlichen und dem Fachmann bekannten Formen gemeint.

Vorteilhaft beträgt der Anteil des Füllstoffs 3 bis 50 Gew.-%, vorzugsweise 5 bis 40 Gew.-%, insbesondere 8 bis 35 Gew.-%, bezogen auf das Gesamtgewicht der Zusammensetzung.

Weiterhin kann die Zusammensetzung nicht-reaktive thermoplastische Polymere, wie beispielsweise Homo- oder Copolymere von ungesättigten Monomeren, insbesondere von ungesättigten Monomeren enthalten, welche ausgewählt sind aus der Gruppe bestehend aus Ethylen, Propylen, Butylen, Isobutylen, Isopren, Vinylacetat oder höhere Ester davon, und (Meth)acrylat, wobei Ethylenvinylacetat-Copolymere (EVA), ataktische Poly-α-Olefine (APAO), Polypropylene (PP) und Polyethylene (PE) besonders geeignet sind.

Weitere geeignete nicht-reaktive thermoplastische Polymere sind Polyester, Polyamide, Polystyrol, Polymethylmethacrylat, thermoplastische Polyurethane oder Polyetherester wie sie beispielsweise unter dem Handelsnamen Hytrel^{®} von der Fima DuPont, USA, kommerziell erhältlich sind.

Die Zusammensetzung kann weitere Bestandteile, insbesondere Katalysatoren, Reaktivverdünner, Hitze- und/oder Lichtstabilisatoren, Thixotropiermittel, Weichmacher, Lösungsmittel, Farbstoffe und Pigmente umfassen.

Zusammensetzungen, wie sie vorhergehend beschrieben sind, eignen sich beispielsweise als Klebstoffe, Dichtstoffe oder als Zusammensetzungen zur Herstellung von Beschichtungen, insbesondere als Strukturklebstoffe.

Weiterhin eignen sich die erfindungsgemässen Zusammensetzungen als schäumbare, hitzehärtende Zusammensetzungen, welche als Strukturschäume in Schottteilen zur Dichtung und/oder Geräuschdämmung oder als Verstärkungsteile zur Verstärkung in Hohlräumen von strukturellen Bauteilen und Verstärkungselementen, insbesondere im Fahrzeugbau, eingesetzt werden. Dem Fachmann sind solche Systeme unter den Begriffen "Baffle" und "Reinforcer" bekannt.

Insbesondere für den Einsatz als schäumbares, hitzehärtendes Material für Baffle- und Reinforcer-Anwendungen haben sich die erfindungsgemässe Zusammensetzungen als besonders vorteilhaft erwiesen, da sie eine sehr gute Haftung auf metallischen Oberflächen aufweisen, und in ihrem Alterungsverhalten eine generelle Steigerung der Resistenz gegenüber Korrosion, insbesondere gegenüber Unterwanderungskorrosion, aufweisen.

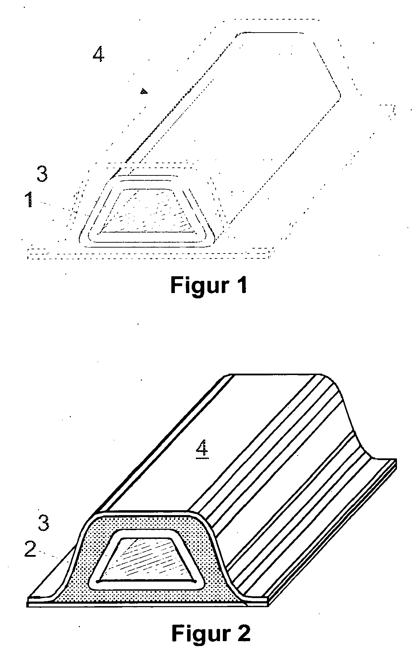

In den Figuren 1 und 2 ist ein Anwendungsbeispiel der vorliegenden Erfindung gemäss vorhergehender Beschreibung schematisch dargestellt.

Figur 1 zeigt ein Verstärkungsteil (Reinforcer), wie es in einem Hohlraum eines strukturellen Bauteils 4 eingesetzt wird vor der Schäumung der in dieser Ausführungsform schäumbaren Zusammensetzung 1, welche sich auf einem Trägerteil 3 befindet. Im Fahrzeugbau werden derartige Verstärkungsteile beim Zusammenbau der Karosserie an Stellen, welche später besonders hohen Belastungen ausgesetzt sind, eingesetzt und beispielsweise mittels eines Clips oder dergleichen an der Karosserie befestigt. Bei der Aushärtung der kathodischen Tauchlackierung (KTL) in einem Ofen schäumt die schäumbare Zusammensetzung auf, verklebt mit dem Bauteil und härtet dann aus.

Figur 2 zeigt ein Verstärkungsteil, wie es in einem Hohlraum eines strukturellen Bauteils 4 eingesetzt ist. Das schäumbare Material 2 ist in diesem Fall bereits vollständig ausgeschäumt und füllt den Hohlraum zwischen dem Trägerteil 3 und dem strukturellen Bauteil 6 vollständig aus.

### Beispiele

### Herstellung der Polymere P1 bis P6

Für die Herstellung der Polymere ***P1*** bis ***P6*** entsprechend der Formel (I) wurde Hycar^{®} 1300X13 CTBN ("X13") bzw. Hycar^{®} 1300X8 CTBN ("X8") mit Cardolite^{®} NC 700 (= Cardanol; "NC 700"), Araldite^{®} GT 7071 ("GT 7071") und gegebenenfalls mit dem Epoxid-Flüssigharz ("BFDGE"), dem Epoxidgruppen aufweisenden Polyphenol ("D.E.N 431") und/oder dem Bisphenol A in den in Tabelle 1 angegebenen Gewichtsanteilen während 10 Stunden bei 120 °C unter Zusatz eines Katalysators (PPh₃) zur Reaktion gebracht. Die Reaktion wurde abgebrochen nachdem ein Epoxidequivalentgewicht (EEW) von 2000 g/eq erreicht war.

**Tabelle 1 Herstellung der Polymere P1 bis P6 der Formel (I).**

| | ***P1*** | ***P2*** | ***P3*** | ***P4*** | ***P5*** | ***P6*** |
|---|---|---|---|---|---|---|
| X13 | 24.99 | 39.98 | | | 24.99 | 24.99 |
| X8 | | | 24.99 | 24.99 | | |
| GT 7071 | 59.97 | 59.97 | 59.97 | 39.98 | 39.98 | 72.18 |
| D.E.N.431 | | | | | 19.99 | |
| BFDGE | | | | 19.99 | | |
| PPh₃ | 0.05 | 0.05 | 0.05 | 0.05 | 0.05 | 0.05 |
| N 700 | 14.99 | | 14.99 | 14.99 | 14.99 | |
| Bisphenol A | | | | | | 2.78 |
| **Summe** | **100** | **100** | **100** | **100** | **100** | **100** |
| EEW [g/eq] | 1920 | 1100 | 2270 | 770 | 830 | 980 |

### Herstellung der Zusammensetzungen Z1 bis Z6

Die Polymere ***P1*** bis ***P6*** wurden mit dem Epoxid-Festharz Araldite^{®} GT 7004 ("GT 7004") bzw. Araldite^{®} GT 7071 ("GT 7071") in der in Tabelle 2 angegebenen Gewichtsverhältnissen gemischt. Danach wurden die zusätzlichen in Tabelle 2 aufgeführten Substanzen in den entsprechenden Gewichtsanteilen zugegeben und in einem Extruder gemischt.

### Herstellung der Zusammensetzungen Ref1 bis Ref3

Als Referenzbeispiele ***Ref1*** bis ***Ref3*** wurden Zusammensetzungen ohne Polymer entsprechend der Formel (I) dadurch hergestellt, dass die in Tabelle 2 aufgeführten Substanzen in den entsprechenden Gewichtsanteilen zugegeben und in einem Extruder gemischt wurden.

**Tabelle 2 Herstellung der Zusammensetzungen Z1 bis Z6 und der Zusammensetzungen Ref1 bis Ref3;**

| | ***Z1*** | ***Z2*** | ***Z3*** | ***Z4*** | ***Z5*** | ***Z6*** | ***Ref1*** | ***Ref2*** | ***Ref3*** |
|---|---|---|---|---|---|---|---|---|---|
| ***P1*** | 14.2 | | | | | | | | |
| ***P2*** | | 14.2 | | | | | | | |
| ***P3*** | | | 14.2 | | | | | | |
| ***P4*** | | | | 13.9 | | | | | |
| ***P5*** | | | | | 14.2 | | | | |
| ***P6*** | | | | | | 14.2 | | | |
| GT 7004 | 59.9 | 59.8 | 59.9 | 58.5 | 59.8 | 59.8 | 66.1 | | |
| GT 7071 | | | | | | | | 80.3 | 75.1 |
| Epoxysilan¹⁾ | 0.7 | 0.7 | 0.7 | 0.7 | 0.7 | 0.7 | | | |
| EP-CTBN²⁾ | | | | | | | 16.5 | | |
| DICY³⁾ | 1.2 | 1.3 | 1.2 | 1.4 | 1.4 | 1.4 | 1.3 | 2 | 1.8 |
| Füllstoffe | 20.2 | 20.2 | 20.2 | 19.7 | 20.2 | 20.2 | 13.2 | 15.1 | 20.8 |
| Treibmittel | 0.4 | 0.4 | 0.4 | 0.4 | 0.4 | 0.4 | 0.3 | 0.4 | 0.4 |
| SiO₂ | 3.0 | 3.0 | 3.0 | 5.1 | 3.0 | 3.0 | 2.5 | 2 | 1.7 |
| Katalysator | 0.3 | 0.3 | 0.3 | 0.3 | 0.3 | 0.3 | 0.2 | 0.2 | 0.2 |
| **Summe** | **100** | **100** | **100** | **100** | **100** | **100** | **100** | **100** | **100** |
| | | | | | | | | | |
| ZSF H0 [MPa] | 5.0 | 3.5 | 2.9 | 4.8 | 8.4 | 8.1 | 10.5 | 6.6 | 5.9 |
| ZSF H7 [MPa] | 3.8 | 3.5 | 3.4 | 3.6 | 6.9 | 6.3 | 3.1 | 1.3 | 0 |
| Änderung ZSF [%] | **-24** | **-2** | **+15** | **-24** | **-18** | **-22** | **-71** | **-80** | **-100** |

| | | | | | | | | | |
|---|---|---|---|---|---|---|---|---|---|
| ¹⁾ 3-Glycidoxypropyltrimethoxysilan; ²⁾ EP-CTBN = Epoxid-Flüssigharz modifiziertes Hycar^{®} 1300X13 CTBN; ³⁾ Dicyandiamid | | | | | | | | | |

### Beschreibung der Prüfmethoden

Die **Zugscherfestigkeit** ("ZSF") wurde in Anlehnung an ISO 4587/DIN EN 1465 auf einer Zugmaschine Zwick/Roell Z005 bestimmt, wobei jeweils zwei gleiche Substrate miteinander verklebt wurden (Klebefläche: 25x20 mm; Schichtdicke: 2 mm; Messgeschwindigkeit: 10 mm/min; Substrate: feuerverzinkter Stahl G1010 (HLE, HE450M), 100x25x1.8mm; Aushärtung: 30 Min. bei 180°C; Messtemperatur: 23°C (falls nicht anders genannt)).

Die erste Messung der Zugscherfestigkeit ("ZSF H0") wurde nach der Aushärtung der Zusammensetzung durchgeführt. Eine zweite Messung ("ZSF H7") wurde nach der Lagerung des Prüfkörpers während 7 Tagen bei 70 °C und 100% relativer Luftfeuchtigkeit (Cataplasma-Lagerung) durchgeführt. Die Änderung der Zugscherfestigkeit nach Cataplasma-Lagerung ("ZSF H7") in Bezug zur Zugscherfestigkeit nach der Aushärtung ("ZSF H0") ist in % angegeben.

Die Bruchbilder wurden visuell analysiert, wobei die visuell bestimmte Korrosion auf den Substraten tendenziell mit den Resultaten der Messung der Zugscherfestigkeiten übereinstimmte. Bei den nicht erfindungsgemässen Formulierungen ***Ref1*** bis ***Ref3*** wurde auf den Substraten eine erhebliche Unterwanderungskorrosion festgestellt, welche zum Teil zu spontanem adhäsivem Versagen der Klebeverbindung führte (ZSF H7 = 0). Die erfindungsgemässen Zusammensetzungen ***Z1*** bis ***Z6*** zeigten ein kohäsives Bruchbild ohne Anzeichen von Korrosion auf den Substraten.

### Resultate

Die Resultate der Bestimmung der Zugscherfestigkeiten sind in Tabelle 2 dargestellt. Sie zeigen, dass der Abfall der Zugscherfestigkeit bei den erfindungsgemässen Beispielen nach der Cataplasma-Lagerung gegenüber dem bei den Referenzbeispielen ***Ref1*** bis ***Ref3*** ohne Polymer der Formel (I) deutlich geringer ist, oder dass sogar vereinzelt eine höhere Zugscherfestigkeit nach der Cataplasma-Lagerung gemessen wurde. Der geringere Haftungsabfall bei den erfindungsgemässen Beispielen ist auf die geringere Unterwanderungskorrosion zurückzuführen.

### Bezugszeichenliste

- 1: schäumbare Zusammensetzung
- 2: geschäumte Zusammensetzung
- 3: Trägermaterial
- 4: strukturelles Bauteil

## Patentansprüche

1. Polymer der Formel (I) 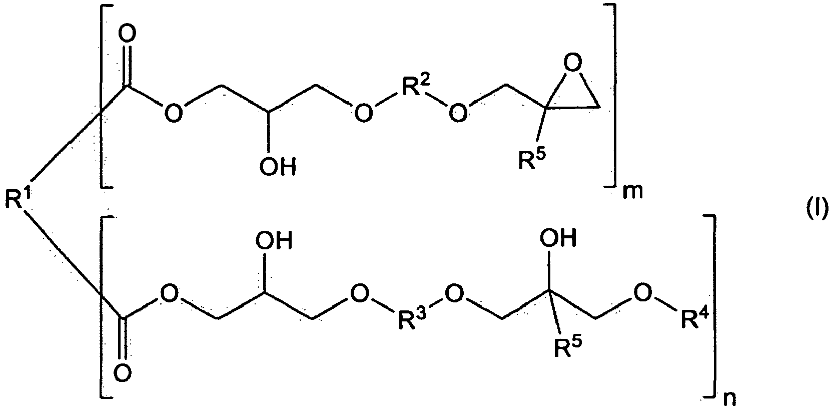
wobei R¹ für einen zweiwertigen Rest eines Carboxylgruppen terminierten Butadien/Acrylnitril-Copolymers **CTBN** nach Entfernung der terminalen Carboxylgruppen steht;
R² und R³ unabhängig voneinander jeweils für einen zweiwertigen Rest eines Epoxid-Festharzes nach Entfernung der terminalen Glycidylethergruppen steht;
R⁴ für eine Alkylarylgruppe oder für einen einkernigen, mehrkernigen oder kondensierten aromatischen Rest steht, welcher für den Fall, dass m = 0 ist, gegebenenfalls eine oder mehrere phenolische Hydroxylgruppen aufweist; oder für einen Rest der Formel (III) steht 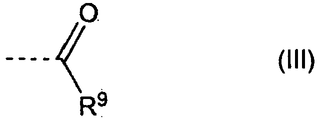
wobei
R⁹ für eine Alkylarylgruppe oder für einen einkernigen, mehrkernigen oder kondensierten aromatischen Rest steht, für den Fall, dass m = 0 ist, gegebenenfalls eine oder mehrere phenolische Hydroxylgruppen aufweist;
R⁵ unabhängig voneinander jeweils für ein Wasserstoffatom oder für eine Methylgruppe steht; und m für einen Wert von 0 oder 1, insbesondere für 0, steht; und n für einen Wert von 1 oder 2, insbesondere für 2, steht, mit der Massgabe, dass (m + n) = 2 ist.

2. Polymer gemäss einem der vorhergehenden Ansprüche, **dadurch gekennzeichnet, dass** die Reste R² und R³ unabhängig voneinander jeweils für einen zweiwertigen Rest der Formel (II) stehen 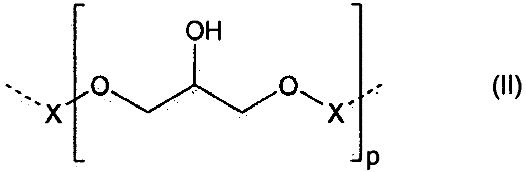
wobei p für einen Wert von ≥ 2, insbesondere von 2 bis 12, bevorzugt von 2 bis 7, steht; und
X unabhängig voneinander jeweils für einen zweiwertigen Rest eines Diphenols nach Entfernung der Hydroxylgruppen steht.

3. Polymer gemäss Anspruch 2, **dadurch gekennzeichnet, dass** das Diphenol ausgewählt ist aus der Gruppe bestehend aus 1,4-Dihydroxybenzol, 1,3-Dihydroxybenzol, 1,2-Dihydroxybenzol, 1,3-Dihydroxytoluol, 3,5-Dihydroxy-benzoate, 2,2-Bis(4-hydroxyphenyl)propan (= Bisphenol A), Bis(4-hydroxyphenyl)methan (= Bisphenol F), Bis(4-hydroxyphenyl)sulfon (= Bisphenol S), Naphtoresorcin, Dihydroxynaphthalin, Dihydroxyanthrachinon, Dihydroxybiphenyl, 3,3-bis(p-hydroxyphenyl)phthalide, 5,5-Bis(4-hydroxyphenyl)hexahydro-4,7-methanoindan, Phenolpthalein, Fluorescein, 4,4'-[bis-(hydroxyphenyl)-1,3-Phenylenbis-(1-Methyl-ethyliden)] (= Bisphenol M), 4,4'-[bis-(hydroxyphenyl)-1,4-Phenylenbis-(1-Methyl-ethyliden)] (= Bisphenol P), 2,2'-Diallyl-bisphenol-A, Diphenole und Dikresole hergestellt durch Umsetzung von Phenolen oder Kresolen mit Di-isopropylidenbenzol sowie alle Isomeren der vorgenannten Verbindungen.

4. Polymer gemäss einem der vorhergehenden Ansprüche, **dadurch gekennzeichnet, dass** R¹ die Formel (IV) aufweist 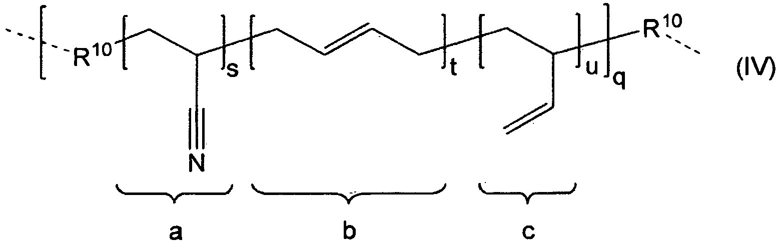
wobei die gestrichelten Linien die Anbindungsstellen der zwei Carboxylgruppen darstellen;
a das Strukturelement, welches von Acrylnitril stammt, und b und c die Strukturelemente, welche von Butadien stammen, darstellen;
R¹⁰ für einen linearen oder verzweigten Alkylenrest mit 1 bis 6 C-Atomen, insbesondere mit 4 C-Atomen, welcher gegebenenfalls mit ungesättigten Gruppen substituiert ist, steht;
q für einen Wert von 40 bis 100, insbesondere von 50 bis 90, steht;
s für einen Wert von 0.05 bis 0.3 steht;
t für einen Wert von 0.5 bis 0.8 steht;
u für einen Wert 0.1 bis 0.2 steht;
mit der Massgabe, dass (s + t + u) = 1 ist.

5. Polymer gemäss Anspruch 4, **dadurch gekennzeichnet, dass**
q für einen Wert von 52 bis 66, insbesondere von 54 bis 62, steht;
s für einen Wert von 0.1 bis 0.25 steht;
t für einen Wert von 0.6 bis 0.7 steht;
u für einen Wert 0.13 bis 0.15 steht;
mit der Massgabe, dass (s + t + u) = 1 ist.

6. Polymer gemäss einem der vorhergehenden Ansprüche, **dadurch gekennzeichnet, dass** der Rest R⁴ ausgewählt ist aus der Gruppe bestehend aus Phenol, Kresol, p-tert.-Butylphenol, 3-Pentadecenylphenol, Nonylphenol, Hydrochinon-monomethylether, Hydroxybenzylalkohol, eine aromatische oder aliphatische Carbonsäure wie Benzoesäure, einem Diphenol wie mit Styrol oder Dicyclopentadien umgesetzte Phenole, Bisphenol A, Bisphenol F, Phenolphthalein, 4-Bis(4-hydroxyphenyl)valeriansäure, p-Hydroxybenzoesäure, Hydroxybenzylalkohol und Benzylalkohol jeweils nach Entfernung einer OH-Gruppe.

7. Verfahren zur Herstellung eines Polymers gemäss einem der Ansprüche 1 bis 6 durch eine Umsetzung eines Carboxylgruppen terminierten Polymers der Formel (V) mit einem Epoxid-Festharz der Formel (VI), 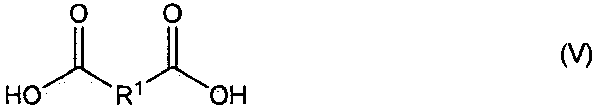 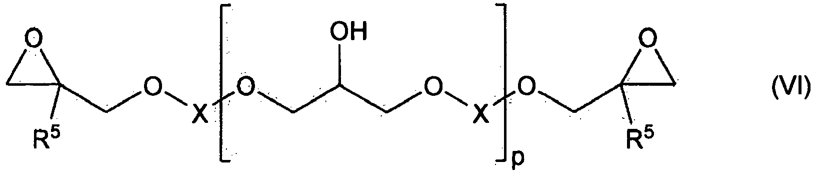 wobei das das molare Verhältnis der Epoxidgruppen des Epoxid-Festharzes zu den Carboxylgruppen des Butadien/Acrylonitril-Copolymeren **CTBN** ≥2:1, bevorzugt zwischen 3:1 und 10:1.

8. Verfahren gemäss Anspruch 7 **dadurch gekennzeichnet, dass** die terminalen Epoxidgruppen des hergestellten Polymers zumindest teilweise durch die Umsetzung mit einer Verbindung der Formel (VII) umgesetzt werden
HO-R⁴ (VII)
wobei R⁴ für eine Alkylarylgruppe oder für einen einkernigen, mehrkernigen oder kondensierten aromatischen Rest steht, welcher für den Fall, dass m = 0 ist, gegebenenfalls eine oder mehrere phenolische Hydroxylgruppen aufweist; oder
für einen Rest der Formel (III) steht 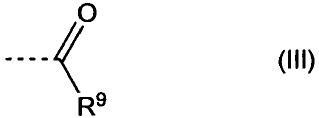 wobei
R⁹ für eine Alkylarylgruppe oder für einen einkernigen, mehrkernigen oder kondensierten aromatischen Rest steht, für den Fall, dass m = 0 ist, gegebenenfalls eine oder mehrere phenolische Hydroxylgruppen aufweist.

9. Verwendung eines Polymers der Formel (I) gemäss einem der Ansprüche 1 bis 6 als Schlagzähigkeitsverbesserer in einer Polymermatrix.

10. Verwendung gemäss Anspruch 9, **dadurch gekennzeichnet, dass** die Polymermatrix eine Epoxidharzmatrix ist.

11. Zusammensetzung umfassend
a) mindestens ein Polymer gemäss einem der Ansprüche 1 bis 6;
b) mindestens ein Epoxid-Festharz **EP**; und
c) mindestens einen Härter **H** für Epoxidharze.

12. Zusammensetzung gemäss Anspruch 11, **dadurch gekennzeichnet, dass** das feste Epoxidharz **EP** herstellbar ist durch die Umsetzung von Verbindungen der Formel HO-X-OH mit Epichlorhydrin und/oder 2-Methyl-epichlorhydrin, wobei X jeweils für einen zweiwertigen Rest eines Diphenols nach Entfernung der Hydroxylgruppen steht, welcher insbesondere ausgewählt ist aus der Gruppe bestehend aus 1,4-Dihydroxybenzol, 1,3-Dihydroxybenzol, 1,2-Dihydroxybenzol, 1,3-Dihydroxytoluol, 3,5-Dihydroxybenzoate, 2,2-Bis(4-hydroxyphenyl)propan (= Bisphenol A), Bis(4-hydroxyphenyl)methan (= Bisphenol F), Bis(4-hydroxyphenyl)sulfon (= Bisphenol S), Naphtoresorcin, Dihydroxynaphthalin, Dihydroxyanthrachinon, Dihydroxy-biphenyl, 3,3-bis(p-hydroxyphenyl)phthalide, 5,5-Bis(4-hydroxyphenyl)hexahydro-4,7-methano-indan, Phenolpthalein, Fluorescein, 4,4'-[bis-(hydroxyphenyl)-1,3-Phenylenbis-(1-Methyl-ethyliden)] (= Bisphenol M), 4,4'-[bis-(hydroxyphenyl)-1,4-Phenylen-bis-(1-Methyl-ethyliden)] (= Bisphenol P), 2,2'-Diallyl-bisphenol-A, Diphenole und Dikresole hergestellt durch Umsetzung von Phenolen oder Kresolen mit Di-isopropylidenbenzol sowie alle Isomeren der vorgenannten Verbindungen.

13. Zusammensetzung gemäss einem der Ansprüche 11 oder 12, **dadurch gekennzeichnet, dass** der Härter **H** für Epoxidharze durch erhöhte Temperatur aktiviert wird.

14. Zusammensetzung gemäss einem der Ansprüche 11 bis 13, **dadurch gekennzeichnet, dass** der Härter **H** für Epoxidharze Dicyandiamid enthält.

15. Zusammensetzung gemäss einem der Ansprüche 11 bis 14, **dadurch gekennzeichnet, dass** die Zusammensetzung zusätzlich mindestens einen festen Zähigkeitsverbesserer, insbesondere ein Core-Shell-Polymer, umfasst.

16. Zusammensetzung gemäss einem der Ansprüche 11 bis 15, **dadurch gekennzeichnet, dass** die Zusammensetzung zusätzlich weitere Bestandteile enthält, welche insbesondere ausgewählt sind aus der Gruppe bestehend aus Treibmittel, Füllstoff, nicht-reaktive thermoplastische Polymere, Katalysatoren, Reaktivverdünner, Hitze- und/oder Lichtstabilisatoren, Thixotropiermittel, Weichmacher, Lösungsmittel, Farbstoffe und Pigmente.

17. Verwendung einer Zusammensetzung gemäss einem der Ansprüche 11 bis 16 als Strukturklebstoff und/oder als schäumbare, hitzehärtende Zusammensetzung für die Verstärkung in Hohlräumen von strukturellen Bauteilen und Verstärkungselementen.

## Claims

1. Polymer of the formula (I) 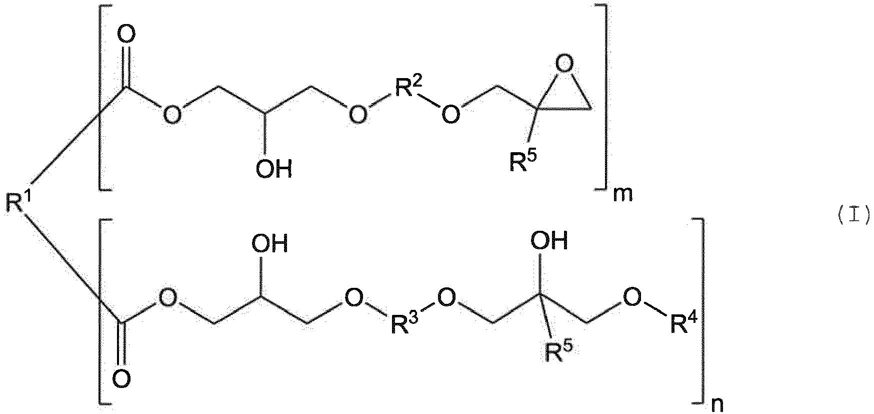
in which R¹ is a divalent radical of a carboxyl-terminated butadiene/acrylonitrile copolymer **CTBN** after removal of the terminal carboxyl groups;
R² and R³, independently of one another, are each a divalent radical of a solid epoxy resin after removal of the terminal glycidyl ether groups;
R⁴ is an alkylaryl group or a mononuclear, polynuclear or condensed aromatic radical which, if m = 0, optionally has one or more phenolic hydroxyl groups; or
is a radical of the formula (III) 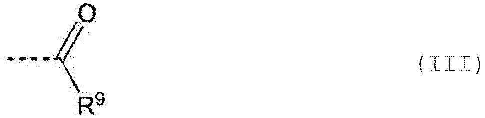 in which
R⁹ is an alkylaryl group or a mononuclear, polynuclear or condensed aromatic radical, if m = 0, optionally has one or more phenolic hydroxyl groups;
R⁵, independently of one another, is in each case a hydrogen atom or a methyl group; and m has a value of 0 or 1, in particular 0; and n has a value of 1 or 2, in particular 2,
with the proviso that (m + n) = 2.

2. Polymer according to any of the preceding claims, **characterized in that** the radicals R² and R³, independently of one another, are each a divalent radical of the formula (II) 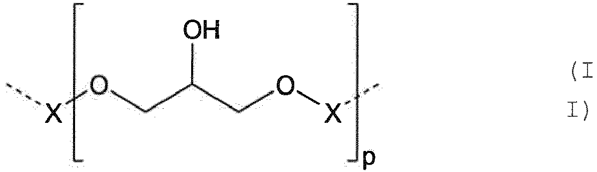
in which p has a value of ≥ 2, in particular from 2 to 12, preferably from 2 to 7; and
X, independently of one another, is in each case a divalent radical of a diphenol after removal of the hydroxyl groups.

3. Polymer according to Claim 2, **characterized in that** the diphenol is selected from the group consisting of 1,4-dihydroxybenzene, 1,3-dihydroxybenzene, 1,2-dihydroxybenzene, 1,3-dihydroxytoluene, 3,5-dihydroxybenzoates, 2,2-bis(4-hydroxyphenyl)propane (= bisphenol A), bis(4-hydroxyphenyl)methane (= bisphenol F), bis(4-hydroxyphenyl) sulfone (= bisphenol S), naphthoresorcinol, dihydroxynaphthalene, dihydroxyanthraquinone, dihydroxybiphenyl, 3,3-bis(p-hydroxyphenyl)phthalides, 5,5-bis(4-hydroxyphenyl)hexahydro-4,7-methanoindane, phenolphthalein, fluorescein, 4,4'-[bis(hydroxyphenyl)-1,3-phenylenebis(1-methylethylidene)] (= bisphenol M), 4,4'-[bis(hydroxyphenyl)-1,4-phenylenebis(1-methylethylidene)] (= bisphenol P), 2,2'-diallylbisphenol A, diphenols and dicresols prepared by reacting phenols or cresols with diisopropylidenebenzene and all isomers of the abovementioned compounds.

4. Polymer according to any of the preceding claims, **characterized in that** R¹ has the formula (IV) 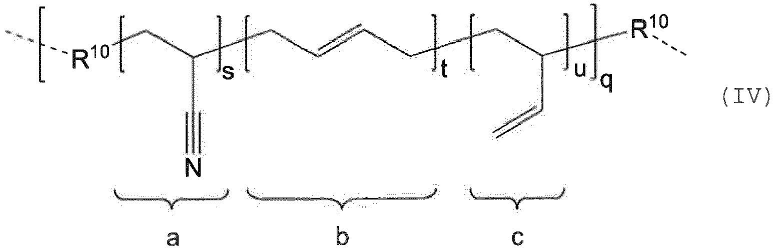
in which the dashed lines represent the bonding sites of the two carboxyl groups;
a is the structural element which originates from acrylonitrile and b and c are the structural elements which originate from butadiene;
R¹⁰ is a straight-chain or branched alkylene radical having 1 to 6 C atoms, in particular having 4 C atoms, which is optionally substituted by unsaturated groups;
q has a value of from 40 to 100, in particular from 50 to 90;
s has a value of from 0.05 to 0.3;
t has a value of from 0.5 to 0.8;
u has a value of from 0.1 to 0.2;
with the proviso that (s + t + u) = 1.

5. Polymer according to Claim 4, **characterized in that**
q has a value of from 52 to 66, in particular from 54 to 62;
s has a value of from 0.1 to 0.25;
t has a value of from 0.6 to 0.7;
u has a value of from 0.13 to 0.15;
with the proviso that (s + t + u) = 1.

6. Polymer according to any of the preceding claims, **characterized in that** the radical R⁴ is selected from the group consisting of phenol, cresol, p-tert-butylphenol, 3-pentadecenylphenol, nonylphenol, hydroquinone monomethyl ether, hydroxybenzyl alcohol, an aromatic or aliphatic carboxylic acid, such as benzoic acid, a diphenol, such as phenols reacted with styrene or dicyclopentadiene, bisphenol A, bisphenol F, phenolphthalein, 4-bis(4-hydroxyphenyl)valeric acid, p-hydroxybenzoic acid, hydroxybenzyl alcohol and benzyl alcohol, in each case after removal of an OH group.

7. Process for the preparation of a polymer according to any of Claims 1 to 6 by reacting a carboxyl-terminated polymer of the formula (V) with a solid epoxy resin of the formula (VI) 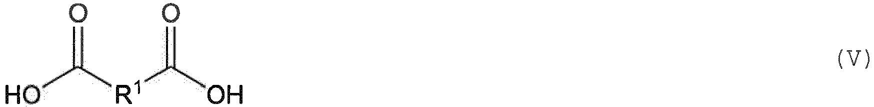 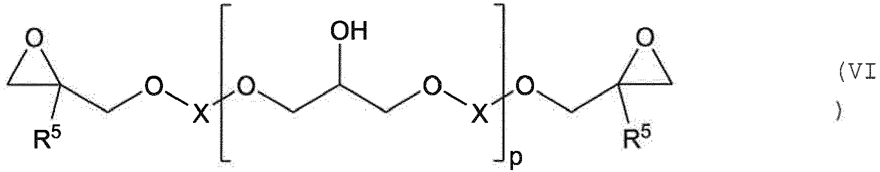 in which the the molar ratio of the epoxide groups of the solid epoxy resin to the carboxyl groups of the butadiene/acrylonitrile copolymer **CTBN** ≥ 2:1, preferably from 3:1 to 10:1.

8. Process according to Claim 7, **characterized in that** the terminal epoxide groups of the polymer prepared are reacted at least partly by the reaction with a compound of the formula (VII)
**HO-R⁴** (VII)
in which R⁴ is an alkylaryl group or a mononuclear, polynuclear or condensed aromatic radical which, if m is 0, optionally has one or more phenolic hydroxyl groups; or is a radical of the formula (III) 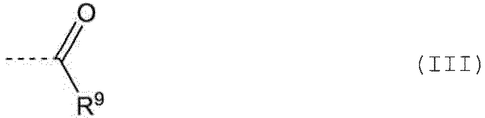 in which
R⁹ is an alkylaryl group or a mononuclear, polynuclear or condensed aromatic radical, if m = 0, optionally has one or more phenolic hydroxyl groups.

9. Use of a polymer of the formula (I) according to any of Claims 1 to 6 as an impact strength improver in a polymer matrix.

10. Use according to Claim 9, **characterized in that** Polymer matrix is an epoxy resin matrix.

11. Composition comprising
a) at least one polymer according to any of Claims 1 to 6;
b)at least one solid epoxy resin **EP**; and
c)at least one curing agent **H** for epoxy resins.

12. Composition according to Claim 11, **characterized in that** the solid epoxy resin EP can be prepared by reacting compounds of the formula HO-X-OH with epichlorohydrin and/or 2-methylepichlorohydrin,
in which X in each case is a divalent radical of a diphenol after removal of the hydroxyl groups, which in particular is selected from the group consisting of 1,4-dihydroxybenzene, 1,3-dihydroxybenzene, 1,2-dihydroxybenzene, 1,3-dihydroxytoluene, 3,5-dihydroxybenzoates, 2,2-bis(4-hydroxyphenyl)propane (= bisphenol A), bis(4-hydroxyphenyl)methane (= bisphenol F), bis(4-hydroxyphenyl) sulfone (= bisphenol S), naphthoresorcinol, dihydroxynaphthalene, dihydroxyanthraquinone, dihydroxybiphenyl, 3,3-bis(p-hydroxyphenyl)phthalides, 5,5-bis(4-hydroxyphenyl)hexahydro-4,7-methanoindane, phenolphthalein, fluorescein, 4,4'-[bis(hydroxyphenyl)-1,3-phenylenebis(1-methylethylidene)] (= bisphenol M), 4,4'-[bis(hydroxyphenyl)-1,4-phenylenebis(1-methylethylidene)] (= bisphenol P), 2,2'-diallylbisphenol A, diphenols and dicresols prepared by reacting phenols or cresols with diisopropylidenebenzene and all isomers of the abovementioned compounds.

13. Composition according to either of Claims 11 and 12, **characterized in that** the curing agent **H** for epoxy resins is activated by elevated temperature.

14. Composition according to any of Claims 11 to 13, **characterized in that** the curing agent **H** for epoxy resins contains dicyandiamide.

15. Composition according to any of Claims 11 to 14, **characterized in that** the composition additionally comprises at least one solid toughness improver, in particular a core-shell polymer.

16. Composition according to any of Claims 11 to 15, **characterized in that** the composition additionally contains further constituents which in particular are selected from the group consisting of blowing agent, filler, unreactive thermoplastic polymers, catalysts, reactive diluents, heat and/or light stabilizers, thixotropic agent, plasticizer, solvent, dyes and pigments.

17. Use of a composition according to any of Claims 11 to 16 as a structural adhesive and/or as a foamable, heat-curing composition for reinforcement in cavities of structural components and reinforcing elements.

## Revendications

1. Polymère de formule (I) 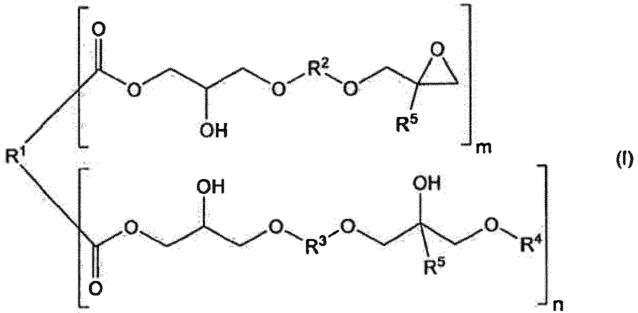 dans laquelle
R¹ représente un radical divalent d'un copolymère de butadiène/acrylonitrile terminé par des groupes carboxyle CTBN après élimination des groupes carboxyle terminaux ;
R² et R³ représentent, indépendamment l'un de l'autre, à chaque fois un radical divalent d'une résine solide époxyde après élimination des groupes glycidyléther terminaux ;
R⁴ représente un groupe alkylaryle ou un radical aromatique monocyclique, polycyclique ou condensé qui, dans le cas où m = 0, présente le cas échéant un ou plusieurs groupes hydroxyle phénoliques ; ou un radical de formule (III) 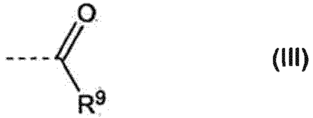
dans laquelle
R⁹ représente un groupe alkylaryle ou un radical aromatique monocyclique, polycyclique ou condensé, dans le cas où m = 0, présente le cas échéant un ou plusieurs groupes hydroxyle phénoliques ;
R⁵ représente, indépendamment, à chaque fois un atome d'hydrogène ou un groupe méthyle ;
et m représente une valeur 0 ou 1, en particulier 0 ;
et n représente une valeur 1 ou 2, en particulier 2, à condition que (m + n) = 2.

2. Polymère selon l'une quelconque des revendications précédentes, **caractérisé en ce que** les radicaux R² et R³ représentent, à chaque fois indépendamment l'un de l'autre, un radical divalent de formule (II) 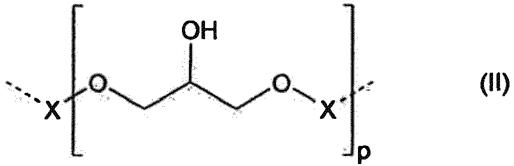 dans laquelle
p représente une valeur ≥ 2, en particulier de 2 à 12, de de préférence de 2 à 7 ; et
X représente, indépendamment, à chaque fois un radical divalent d'un diphénol après élimination des groupes hydroxyle.

3. Polymère selon la revendication 2, **caractérisé en ce que** diphénol est choisi dans le groupe constitué par 1,4-dihydroxybenzène, 1,3-dihydroxybenzène, 1,2-dihydroxybenzène, 1,3-dihydroxytoluène, 3,5-dihydroxybenzoate, 2,2-bis(4-hydroxyphényl)propane (= Bisphénol A), bis(4-hydroxyphényl)méthane (= Bisphénol F), bis(4-hydroxyphényl)sulfone (= Bisphénol S), naphtorésorcinol, dihydroxynaphtalène, dihydroxyanthraquinone, dihydroxybiphényle, 3,3-bis(p-hydroxyphényl)phtalide, 5,5-bis(4-hydroxyphényl)hexahydro-4,7-méthano-indane, phénolphtaléine, fluorescéine, 4,4'-[bis-(hydroxyphényl)-1,3-phénylènebis-(1-méthyléthylidène)] (= Bisphénol M), 4,4'-[bis-(hydroxyphényl)-1,4-phénylènebis-(1-méthyléthylidène)] (= Bisphénol P), 2,2'-diallylbisphénol-A, diphénols et dicrésols, préparés par transformation de phénols ou de crésols avec du diisopropylidènebenzène, ainsi que tous les isomères des composés susmentionnés.

4. Polymère selon l'une quelconque des revendications précédentes, **caractérisé en ce que** R¹ présente la formule (IV) 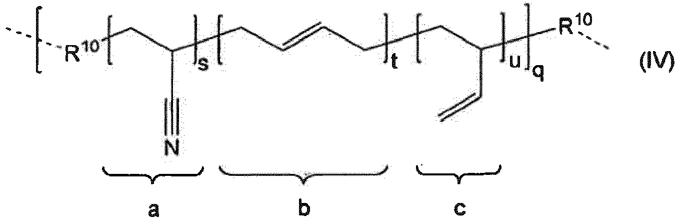 dans laquelle
les lignes en pointillés représentent les sites de liaison des deux groupes carboxyle ;
a représente l'élément structural qui est dérivé de l'acrylonitrile et b et c représentent les éléments structuraux qui sont dérivés du butadiène ;
R¹⁰ représente un radical alkylène linéaire ou ramifié comprenant 1 à 6 atomes de carbone, en particulier 4 atomes de carbone, qui est le cas échéant substitué par des groupes insaturés ;
q représente une valeur de 40 à 100, en particulier de 50 à 90 ;
s représente une valeur de 0,05 à 0,3 ;
t représente une valeur de 0,5 à 0,8 ;
u représente une valeur de 0,1 à 0,2 ;
à condition que (s + t + u) = 1.

5. Polymère selon la revendication 4, **caractérisé en ce que**
q représente une valeur de 52 à 66, en particulier de 54 à 62 ;
s représente une valeur de 0,1 à 0,25 ;
t représente une valeur de 0,6 à 0,7 ;
u représente une valeur de 0,13 à 0,15 ;
à condition que (s + t + u) = 1.

6. Polymère selon l'une quelconque des revendications précédentes, **caractérisé en ce que** le radical R⁴ est choisi dans le groupe constitué par phénol, crésol, p-tert-butylphénol, 3-pentadécénylphénol, nonylphénol, hydroquinonemonométhyléther, alcool hydroxybenzylique, un acide carboxylique aromatique ou aliphatique, tel que l'acide benzoïque, un diphénol tel que des phénols substitués par du styrène ou du dicyclopentadiène, Bisphénol A, Bisphénol F, phénolphtaléine, acide 4-bis(4-hydroxyphényl)valérique, acide p-hydroxybenzoïque, alcool hydroxybenzylique et alcool benzylique à chaque fois après élimination d'un groupe OH.

7. Procédé pour la préparation d'un polymère selon l'une quelconque des revendications 1 à 6 par transformation d'un polymère, terminé par des groupes carboxyle, de formule (V) avec une résine solide époxyde de formule (VI) 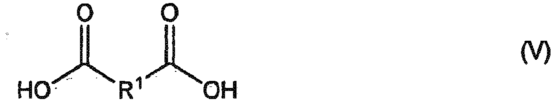 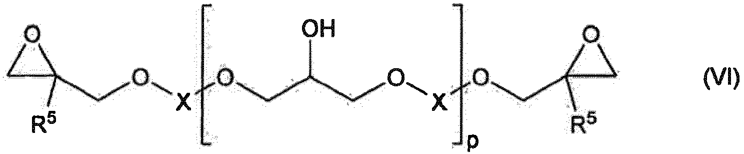 dans lequel le le rapport molaire des groupes époxyde de la résine solide époxyde aux groupes carboxyle du copolymère de butadiène/acrylonitrile CTBN ≥ 2:1, de préférence situé entre 3:1 et 10:1.

8. Procédé selon la revendication 7, **caractérisé en ce que** les groupes époxyde terminaux du polymère préparé sont transformés au moins partiellement par la transformation avec un composé de formule (VII)
HO-R⁴ (VII)
dans laquelle R⁴ représente un groupe alkylaryle ou un radical aromatique monocyclique, polycyclique ou condensé qui, dans le cas où m = 0, présente le cas échéant un ou plusieurs groupes hydroxyle phénoliques ; ou un radical de formule (III) 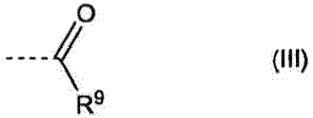 dans laquelle
R⁹ représente un groupe alkylaryle ou un radical aromatique monocyclique, polycyclique ou condensé, dans le cas où m = 0, présente le cas échéant un ou plusieurs groupes hydroxyle phénoliques.

9. Utilisation d'un polymère de formule (I) selon l'une quelconque des revendications 1 à 6 comme agent d'amélioration de la résilience dans une matrice polymère.

10. Utilisation selon la revendication 9, **caractérisée en ce que** la matrice polymère est une matrice de résine époxyde.

11. Composition comprenant
a) au moins un polymère selon l'une quelconque des revendications 1 à 6,
b) au moins une résine époxyde solide EP ; et
c) au moins un durcisseur H pour résines époxyde.

12. Composition selon la revendication 11, **caractérisée en ce que** la résine époxyde solide EP peut être préparée par transformation de composés de formule HO-X-OH avec de l'épichlorhydrine et/ou de la 2-méthylépichlorhydrine, X représentant à chaque fois un radical divalent d'un diphénol après élimination des groupes hydroxyle, qui est en particulier choisi dans le groupe constitué par 1,4-dihydroxybenzène, 1,3-dihydroxybenzène, 1,2-dihydroxybenzène, 1,3-dihydroxytoluène, 3,5-dihydroxybenzoate, 2,2-bis(4-hydroxyphényl)propane (= Bisphénol A), bis(4-hydroxyphényl)méthane (= Bisphénol F), bis(4-hydroxyphényl)sulfone (= Bisphénol S), naphtorésorcinol, dihydroxynaphtalène, dihydroxyanthraquinone, dihydroxybiphényle, 3,3-bis(p-hydroxyphényl)phtalide, 5,5-bis(4-hydroxyphényl)hexahydro-4,7-méthano-indane, phénolphtaléine, fluorescéine, 4,4'-[bis-(hydroxyphényl)-1,3-phénylènebis-(1-méthyléthylidène)] (= Bisphénol M), 4,4'-[bis-(hydroxyphényl)-1,4-phénylènebis-(1-méthyléthylidène)] (= Bisphénol P), 2,2'-diallylbisphénol-A, diphénols et dicrésols préparés par transformation de phénols ou de crésols avec du diisopropylidènebenzène ainsi que tous les isomères des composés susmentionnés.

13. Composition selon l'une quelconque des revendications 11 ou 12, **caractérisée en ce que** le durcisseur H pour résines époxyde est activé par une température élevée.

14. Composition selon l'une quelconque des revendications 11 à 13, **caractérisée en ce que** le durcisseur H pour résines époxyde contient du dicyanodiamide.

15. Composition selon l'une quelconque des revendications 11 à 14, **caractérisée en ce que** la composition contient en outre au moins un agent solide d'amélioration de la résilience, en particulier un polymère noyau-coquille.

16. Composition selon l'une quelconque des revendications 11 à 15, **caractérisée en ce que** la composition contient en outre d'autres constituants, qui sont en particulier choisis dans le groupe constitué par les agents gonflants, les charges, les polymères thermoplastiques non réactifs, les catalyseurs, les diluants réactifs, les stabilisants à la chaleur et/ou à la lumière, les agents thixotropiques, les plastifiants, les solvants, les colorants et les pigments.

17. Utilisation d'une composition selon l'une quelconque des revendications 11 à 16 comme adhésif structural et/ou comme composition pouvant être moussée, thermodurcissable pour le renforcement dans les espaces creux de pièces structurales et d'éléments de renforcement.
